# EUROPEAN PATENT SPECIFICATION

(11) **EP 4 113 064 B1**
(45) Date of publication and mention of the grant of the patent: **21.10.2026**
(21) Application number: 21202478.0
(22) Date of filing: 13.10.2021
(51) Int. Cl.: G01C 21/34, G01C 21/36, B60W 60/00, G08G 1/01, G08G 1/0967, G08G 1/0968, G08G 1/16

(54) **PATH PLANNING FOR VEHICLE BASED ON ACCIDENT INTENSITY**
BAHNPLANUNG FÜR FAHRZEUGE BASIEREND AUF DER UNFALLINTENSITÄT
PLANIFICATION DES TRAJETS D'UN VÉHICULE EN FONCTION DE L'INTENSITÉ DES ACCIDENTS

(30) Priority: 01.07.2021 EP 21183230
(43) Date of publication of application: 04.01.2023
(73) Proprietor: Zenseact AB, 417 56 Göteborg (SE)
(72) Inventor: LINDBERG, Carl, 426 79 Västra Frölunda (SE)
(74) Representative: Zacco Sweden AB

(56) References cited:
- US-A1- 2015 160 024
- US-A1- 2016 086 285
- US-A1- 2018 216 952
- US-A1- 2021 089 938
- US-A1- 2021 293 573
- WIKIPEDIA: "Constrained optimization - Wikipedia", 27 March 2021 (2021-03-27), pages 1 - 6, XP055896262, Retrieved from the Internet <URL:https://en.wikipedia.org/w/index.php?title=Constrained_optimization&oldid=1025465542> [retrieved on 20220301]
- RAMÍREZ ANDRÉS FELIPE ET AL: "Spatiotemporal correlation study of traffic accidents with fatalities and injuries in Bogota (Colombia)", ACCIDENT ANALYSIS & PREVENTION, PERGAMON, GB, vol. 149, 6 November 2020 (2020-11-06), XP086387409, ISSN: 0001-4575, [retrieved on 20201106], DOI: 10.1016/J.AAP.2020.105848
- KARAGANIS ANASTASSIOS N ET AL: "A Spatial Point Process for Estimating the Probability of Occurrence of a Traffic Accident", ERSA 2006 - 46TH CONGRESS OF THE EUROPEAN REGIONAL SCIENCE ASSOCIATION, VOLOS, 2006, 3 September 2006 (2006-09-03), pages 1 - 11, XP093223545, Retrieved from the Internet <URL:https://www.econstor.eu/bitstream/10419/118457/1/ERSA2006_640.pdf> [retrieved on 20241113]

## Description

### TECHNICAL FIELD

The present invention relates to path planning based on estimation of accident intensities for vehicles, and in particular to accident intensities in a statistical sense (e.g. intensity of a Poisson point process).

### BACKGROUND

During these last few years, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. To function as intended, ADAS may rely on inputs from multiple data sources, such as e.g. automotive imaging, LIDAR, radar, image processing, computer vision, and/or in-car networking.

Today, development is ongoing in both ADAS as well as Autonomous Driving (AD), within a number of different technical areas within these fields. ADAS and AD will herein be referred to under the common term Automated Driving System (ADS) corresponding to all of the different levels of automation as for example defined by the SAE J3016 levels (0 - 5) of driving automation.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

It is important that an ADS functions with high reliability and integrity to reduce the risk for the vehicle occupant(s) as well as their surrounding environments to an acceptable level. Ensuring that the risk is sufficiently low requires huge amounts of data to evidence the performance of the ADS. A statistical proof that an ADS is capable of responding to all possible or statistically relevant experiences a vehicle could encounter whilst being driven could, in theory, be obtained by testing the vehicle in the field before the vehicle is sold and driven on public roads. In practice, however, capturing such test data to show how an ADS would respond to every conceivable situation a vehicle could experience would take centuries using currently available technologies. Sharing the experiences of a fleet of, for example, a hundred test vehicles, is currently estimated to require around 500 years for sufficient data to be acquired to provide such a statistical proof. As this length of time is not practical, currently ADS features installed before a vehicle is driven on public roads are made as safe as possible, and are supplemented by monitoring the ADS of the vehicle whilst it is being driven on public roads in order to ensure that the ADS is performing to the required safety levels.

To this end, there have been a number of proposals for increasing the general road safety by utilizing databases with historical accident data to notify the vehicle's ADS or the driver of the vehicle of upcoming road portions associated with historical accidents. For example, EP 3 227 148 A2 discloses a solution where gathered accident data is analyzed for the purpose of sending notifications to educate the users and alert them about accident patterns and precautious measures when being in locations associated with historical accidents.

US 2021/0293573 A1 discloses methods and systems for speed planning for an autonomous vehicle, such as a truck, that is or will be travelling along a route, particularly based on predicted weather conditions along the route, such as weather forecasts relating to one or more segments of the route. In doing so, speed can be modulated to advantageously minimize the risk of travel through an adverse weather condition (e.g., spending a minimal amount of time travelling through the undesirable weather condition or entirely avoiding travel through the undesirable weather condition) that is predicted to be present along at least a portion of the route, thus promoting more reliable and/or safe planned travel for the vehicle. An adverse weather condition can include, for example, heavy rain or snow, thick fog, ice, or sleet, among other possibilities. The type of weather considered by the vehicle's control system and/or associated computing devices and processors to be adverse can be predefined (e.g., hard-coded in the vehicle's software) and dynamically-updated as needed, or can be determined in some other manner.

However, such methods have an inherent flaw in that they are essentially based on the presumption that accident events have occurred at specific geographical locations and/or during specific environmental conditions and that, those locations and/or environmental conditions are therefore high-risk scenarios. However, such methods cannot be used to infer the actual risk of driving at those specific locations and/or during those specific environmental conditions at other appropriately defined similar locations.

There is accordingly a need for improvements in the art for estimating the risk that a vehicle is about to be exposed to in order to mitigate the risk exposure for the vehicle's occupants.

### SUMMARY

It is therefore an object of the present invention to provide a method for determining a path for a vehicle, a computer-readable storage medium, an apparatus, and a vehicle comprising such an apparatus that alleviate all or at least some of the above-discussed drawbacks of presently known systems and methods.

This object is achieved by means of a method for determining a path for a vehicle, a computer-readable storage medium, an apparatus, and a vehicle comprising such an apparatus as defined in the appended independent claims. The term exemplary is in the present context to be understood as serving as an instance, example or illustration.

According to a first aspect of the present invention, there is provided a method according to claim 1.

In accordance with some embodiments, the accident intensity is obtained from a trained model configured to determine the accident intensities associated with the plurality of road portions based on the obtained environmental data and the obtained positional data.

In some embodiments, the trained model is formed based on accident data from one or more accident databases comprising information about a plurality of critical scenarios, a time of each critical scenario and data indicative of frequencies of similar situations as the critical scenarios. Moreover, in some embodiments, the data indicative of frequencies of similar situations as the critical scenarios is in the form of environmental data obtained over time from a plurality of vehicles in a fleet of vehicles.

According to a second aspect of the present invention, there is provided a (non-transitory) computer-readable storage medium according to claim 13.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present invention, there is provided an apparatus according to claim 14.

According to a fourth aspect of the present invention, there is provided a vehicle comprising a localization system for generating positional data indicating a geographical location and a heading of the vehicle, and an apparatus for determining a path for a vehicle according to any one of the embodiments disclosed herein. With this aspect of the invention, similar advantages and preferred features are present as in the previously discussed first aspect of the invention.

An advantage of some embodiments is that the accident risk per route may be lowered without forcing the vehicle or the driver of the vehicle to travel at uncomfortably low speed. In other words, the vehicle can warn the driver about particularly dangerous situations and sites in advance, before he or she comes there, lowering accident risk at an almost negligible cost in travel time.

An advantage of some embodiments is that it is possible to target "just-the-right" road portions and reduce the vehicle speed at those road portions in order to find an optimal path/trajectory in terms of safety as well as other constraints such as e.g., total travel time.

An advantage of some embodiments is that potential "high-risk" situations/scenarios that the vehicle may be exposed to are handled efficiently already at the path planning stage, thereby improving general road safety.

### BRIEF DESCRIPTION OF THE DRAWINGS

Further objects, features and advantages of embodiments of the invention will appear from the following detailed description, reference being made to the accompanying drawings, in which:
Fig. 1 is a schematic block diagram representation of an accident intensity model in accordance with some embodiments.
Fig. 2 is a schematic block diagram representation of an accident intensity engine in accordance with some embodiments.
Fig. 3 is a schematic illustration of a vehicle and an estimated route to be travelled by the vehicle in accordance with some embodiments.
Fig. 4 is a schematic comparison between a path generated by a conventional path planning solution and a path planning solution in accordance with some embodiments.
Fig. 5 is a flow chart representation of a method for determining a path for a vehicle in accordance with some embodiments.
Fig. 6 is a schematic block diagram representation of an apparatus for determining a path for a vehicle in accordance with some embodiments.
Fig. 7 is a schematic side-view of a vehicle comprising an apparatus for determining a path for a vehicle in accordance with some embodiments.

### DETAILED DESCRIPTION

In the following detailed description, embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), Field Programmable Gate Arrays (FPGA) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

As mentioned in the foregoing there is a plethora of suggested approaches for identifying approaching high-risk scenarios. However, the present inventor realized that by forming a measure of accident intensities associated with the scenarios that a vehicle may be exposed to, a new and improved path planning solution for vehicles may be realized. Further, it was realized that merely relying on data from an "accident database" and comparing the reported geographical position at the time of the accident (critical scenario) with a current position and heading of a vehicle may give a blunt estimate of the "risk" that the vehicle is or will be exposed to. Examples of accident databases comprising information about a plurality of critical scenarios include the FIA world accident database (WADB), the IRTAD road safety database, the National Highway Traffic Safety Administration (NHTSA) database, and similar.

In more detail, given accident data including related data such as traffic flow at site and time of accident, speed limit at site of accident, etc., one is only able to answer questions such as - "How many accidents happen while driving 70km/h on a specific stretch of road during rain at night?" - Such questions, while interesting in their own right, say nothing about the actual risk the individual driver faces while driving 70 km/h in rain at night on the specific stretch of road.

Accordingly, the present inventor realized that one may utilize an "accident intensity" (in a Poisson sense), to obtain a better estimate of the risk exposure of the vehicle for upcoming road portions, and in particular to leverage this knowledge in order to optimize the path planning for the vehicle. However, to be able to obtain such estimates of the risk exposure, one needs to estimate a "number of attempts", i.e. how large proportion of all time and/or mileage spent on roads occur with specific environmental conditions that correspond to the environmental conditions of each accident and/or critical scenario (e.g. near-accident scenario).

Therefore, it is herein suggested that uses a measure of "accident intensities" for a number of road portions of an estimated route to be travelled by the vehicle in order to determine a path (or trajectory) for the vehicle along that route. In more detail, one can now utilize the obtained accident intensities in order to calculate e.g. optimal travel velocities (i.e. an optimal speed profile) along a route, which may statistically reduce the accident risk for that route in a significant manner without completely sacrificing other important comfort parameters such as total travel time. Moreover, the herein presented methodology is based on analytically tractable mathematics as opposed to "black-box" technology, which makes it particularly suitable for safety critical systems for vehicles, which aims at minimizing accident risk.

The accident intensities may for example be obtained from a trained model that has been trained based on accident data from one or more accident databases and data indicative of frequencies of similar situations as the critical scenarios. The accident database(s) may for example contain information like weather conditions during a critical scenario, time of day at the critical scenario, type of critical scenario, road type at the critical scenario, road conditions at the critical scenario, and so forth. The term "road type" as used herein may be understood as a characterization of the road such as e.g. national highway, controlled-access highway, state highway, district road, country road, highroad, rural road and so forth.

The data indicative of frequencies of similar situations (i.e. "number of attempts") may for example be derived from a "proxy" such as e.g. traffic flow monitoring solutions (tracking actual traffic flow or mobile devices) or reported directly from a fleet of connected vehicles. In the latter case, and in accordance with some embodiments, the data indicative of frequencies of similar situations is in the form of environmental data (e.g. time of day, weather conditions, road surface conditions, speed limits, type of road, etc.) obtained over time from a plurality of vehicles in a fleet of vehicles. In more detail, a fleet management system may for example request "status reports" from all or a subset of vehicles in a fleet of "connected" vehicles, and over time build the above-mentioned model - "Accident intensity model" - capable of estimating accident intensities for a multitude of scenarios. An advantage of utilizing a fleet of vehicles is that more nuanced data may be available (due to the sensory capabilities of modern vehicles, and in particular ADS-equipped vehicles), which consequently provides a better estimate of the "number of attempts". Thereby, a better estimate of the accident intensity for a given road portion/segment may be obtained, and in extension a better assessment of the risk exposure for a vehicle traveling on the road portion/segment is readily obtainable.

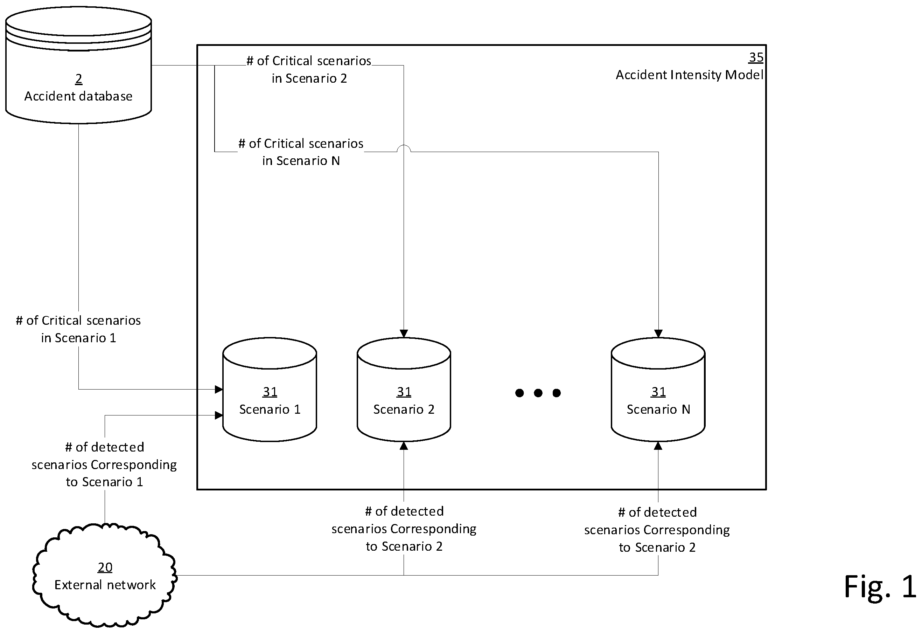

Turning to Fig. 1, a schematic block diagram illustration of an accident intensity model 35 is provided. In more detail, Fig. 1 depicts an illustrative example of how the accident intensity model 35 may be formed and trained/updated over time. Here, each scenario 31 is depicted as a "container" that is formed based on the information associated with each critical scenario that is obtained from one or more accident databases 2 (e.g. via the external network 20). For example, a first scenario 31 ("Scenario 1") may be "driving/traveling at 100 km/h in rain at night on a controlled-access highway", while a second scenario 31 ("Scenario 2") may be "driving/traveling at 60 km/h with icy road conditions, during the day, on a multi-lane road in a densely populated area", and so forth. It should be noted that the type and number of parameters comprised in each scenario may be set independently and have more parameters than the examples provided above. For example, the scenario may further include a time of day, day of week, outside temperature, geographical area/position, speed limit of the associated road portion, presence of barriers, and so forth. In other words, the accident data, that is obtained from the one or more accident databases, is at least indicative of a time and location of each critical scenario (e.g. each accident or "near-accident"). However, the accident data may further be indicative of a road surface condition, a weather condition, presence of road barriers, presence of wildlife fence barriers, number of involved vehicles in the critical scenario, severity of the critical scenario, and so forth.

Moving on, over time, the accident intensity model 35 is further provided with an input in the form of data indicative of frequencies of similar situations as the critical scenarios. This data may for example be retrieved via an external network 20. In more detail, this data may be obtained via a suitable "proxy" output as exemplified above (i.e. indirectly) or directly via "fleet data" (i.e. environmental data retrieved/received from a fleet of vehicles). The latter case may also be construed as a "proxy" of the actual "number of attempts" as one can further apply some statistical modelling on the "fleet data" to obtain an estimate of the "number of attempts" on a bigger scale (e.g. for a whole country). For example, if one knows how many vehicles are in the fleet, the rate of exposure of a given scenario in the fleet, and the percentage of the total population (e.g. of a country) that this fleet represents, one can derive an estimate of the "number of attempts" on a larger scale.

The term "proxy" is in the present context be interpreted broadly and can be understood as any measure indicative of similar situations as the critical scenarios. In other words, the proxy provides data, from which, a number of similar situations as the critical scenarios is derivable.

Further, any time data is retrieved or received via the external network 20, it is "stored" in an appropriate container 21 corresponding to the critical scenario. Then, as the containers 21 are populated, the accident intensity model 35 is capable of providing an output indicative of an accident intensity for each scenario. As the skilled reader readily understands, over time, the accident intensity model 35 will be capable of providing more reliable indications of the accident intensity for a multitude of scenarios that a vehicle may be exposed to.

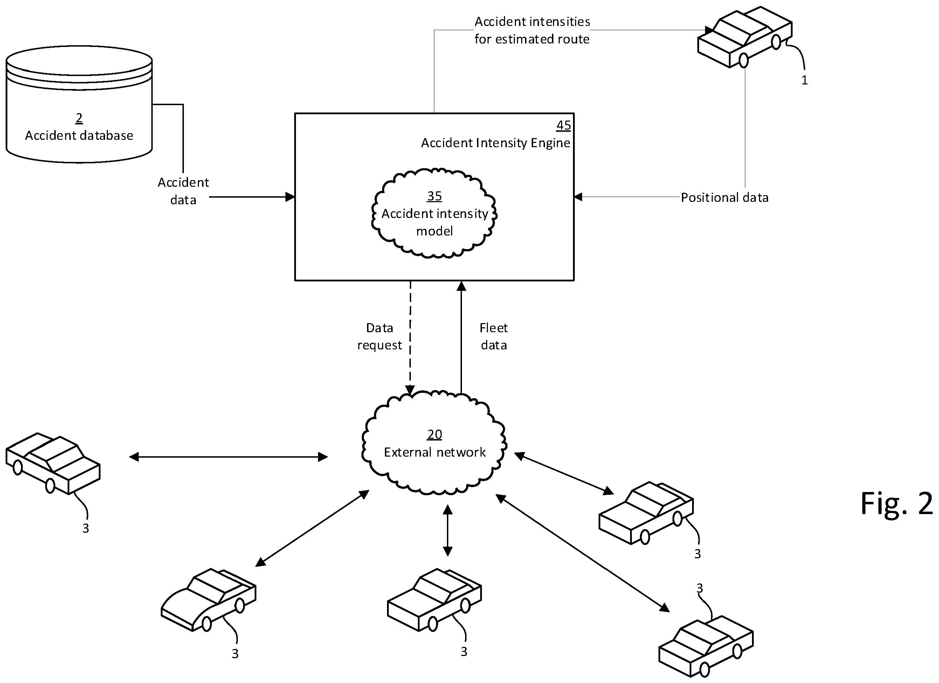

Further, Fig. 2 illustrates a schematic block diagram representation of an accident intensity engine 45 comprising an accident intensity model 45 as described above. The accident intensity model 45 (i.e. trained model) receives (e.g. via the external network 20) historical accident data from one or more suitable accident databases 2 and data indicative of frequencies of similar situations as the critical scenarios (here in the form of "fleet data"). The fleet data may for example obtained from a plurality of vehicles 3, each being part of a fleet of connected vehicles 3, via an external network 20. The accident intensity engine 45 may be configured to (periodically) transmit a data request to one or more (randomly selected) vehicles 3 of the fleet via the external network 20. The data request may for example be sent (periodically) to a random subset of vehicles 3 of the fleet. Upon receiving the request, the one or more vehicles 3 are configured to transmit environmental data to the accident intensity engine 45 via the external network. The transmitted environmental data may for example be a geographical position (e.g. GNSS coordinates), heading, time, temperature, and current speed/velocity of the vehicle). Thus, the environmental data may be indicative of a state of the surrounding environment and furthermore indicative of a state of the (reporting) vehicle 3. In some embodiments, the environmental data further comprises map data (e.g. type of road, presence of barriers, presence of wildlife barrier fences, etc.), number of external vehicles in the surrounding environment, road surface conditions, and weather conditions.

Once the accident intensity model 35 is trained, a vehicle 1 may use the accident intensity engine 45 to obtain an accident intensity for an upcoming road portion (e.g. as part of an automated procedure as the vehicle is autonomously or semi-autonomously operated). In more detail, the vehicle 1 is configured to transmit (time-stamped) positional data indicating a geographical position and a heading (i.e. to transmit a pose) and optionally environmental data indicating a state of the surrounding environment (e.g. road type, weather conditions, and/or road surface conditions). The environmental data may further indicate a state of the vehicle 1 (e.g. speed of the vehicle, windshield wiper status, etc.).

In some embodiments, the weather and road conditions are not directly indicated in the environmental data, but instead derived (by the accident intensity engine 45 or locally in the vehicle 1) from the output of vehicle-mounted sensors. For example, a status of the vehicle's windshield wipers (engaged/disengaged) may be used to derive a weather condition (e.g. rain, snow, etc.), alternatively the output from a vehicle-mounted camera may be used to derive the current weather conditions and road conditions by means of a suitable image-processing algorithm as conventionally known. Moreover, in accordance with a further example, road conditions may be determined by estimating the difference in the speeds of the drive shaft and freely rotating axles in various driving situations and from that difference a level of friction may be derived in order to e.g. determine a presence of ice on the road. However, in some embodiments, weather conditions and/or road conditions may be indirectly obtained by comparing the vehicle's 1 reported position with a weather forecast for that geographical region.

Once the positional data and the environmental data is received by the accident intensity engine 45, the accident intensity engine 45 is configured to determine, by means of the trained accident intensity model 45, an accident intensity for one or more upcoming road portions of an estimated route to be travelled by a vehicle 1. As discussed in the foregoing, the accident intensity model is configured to use the reported pose of the vehicle and the associated environmental data to find a corresponding/matching scenario (see ref. 21 in Fig. 1) for the upcoming road portion and to output the accident intensity for that scenario and thereby the accident intensity for the upcoming road portion.

The accident intensity engine 45 may, in accordance with some embodiments, be provided on a server or a plurality of servers e.g. as a so-called cloud solution. However, in some embodiments, the accident intensity engine 45 together with the accident intensity model 45 is provided locally in each vehicle. In the local setup, the accident intensity model 45 may be subdued to periodical updates from a central managing entity.

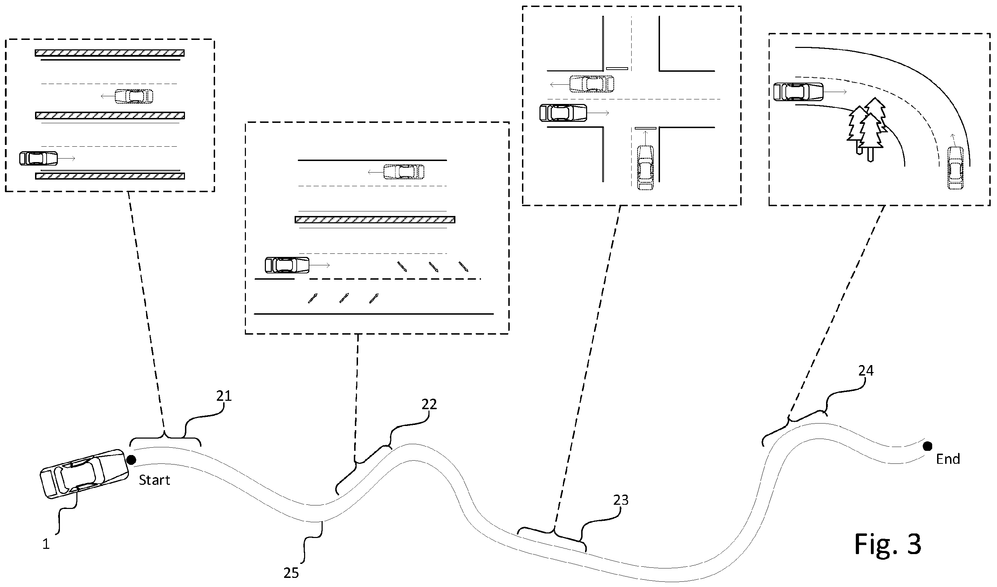

Fig. 3 is a schematic illustration of a vehicle 1 and an estimate route 25 to be travelled by the vehicle 1. The route 25 has a start position (e.g. the current position of the vehicle 1) and an end position, and a plurality of upcoming road portions 21 - 24 along the route 25. Here, each road portion 21-24 is associated with a specific "scenario" as depicted in the dashed boxes in Fig. 3, and should not be construed as limiting examples, but merely to facilitate the understanding of the present invention. The route 25 may comprise more or less road portions, each associated with a specific scenario, which may be more or less similar to the scenarios of the other road portions.

In more detail, the first road portion 21 may be understood as a "traveling on a highway" scenario, with road barriers on each side of the road. The second road portion 22 may be understood as a "highway on-ramp/off-ramp" scenario, while the third road portion 23 may be understood as a "four-way intersection" scenario. Finally, the fourth road portion 24 may be understood as a "curve with obstructed view" scenario.

Furthermore, each scenario may accordingly be associated with some "accident data" meaning that there has been a historical accident/incident at such a scenario. Moreover, even specific road portions may be associated with some "accident data" meaning that there has been a historical accident at those specific road portions. In other words, the road portions 21-24 may be indirectly associated with some "accident data" (i.e. the scenarios for those road portion 21-24 is associated with historical accidents/incidents) or directly associated with "accident data" (i.e. those road portions 21-24 are associated with historical accidents/incidents).

The route 25 may either be estimated given the current position and heading of the vehicle 1 (e.g. as provided by a localization system of the vehicle 1). However, in such cases the route may be of limited length as the longer the estimated route becomes the more route "alternatives" become available and the "estimation" accuracy is reduced. For example, if one wants to estimate a route having a length of at least 1 km, and if the vehicle 1 is traveling on a highway without any possible exit-ramps or road splits approaching for the upcoming two kilometres. Then, one can estimate the route to be travelled by the vehicle with a relatively high degree of accuracy merely based on the current position and heading of the vehicle 1 for those two kilometres.

However, if one wants to estimate a route having a length of at least 1 km and the vehicle is traveling in an urban environment with a number of intersections approaching in the general traveling direction of the vehicle 1. Then, it may be advantageous to have additional information such as e.g. a goal/end position or a pre-planned route from point A to point B. Thus, in some embodiments, the route 25 may be estimated based an intended or pre-planned route of the vehicle 1. For example, an occupant of the vehicle 1 may have provided a desired end/goal position to a navigation system of the vehicle 1 whereupon the navigation system outputs a suggested route from the vehicle's current position to the end/goal position. This suggested route may subsequently be used to estimate the route 25 to be travelled by the vehicle 1. However, in some embodiments, the route may be estimated based on historical driving data of that vehicle 1. For example, based on historical driving patterns of a vehicle 1 it may be concluded that the vehicle generally moves from "home" to "work" between 07.00 and 09.00 at week days, then if the vehicle is started at 07.30 on a Wednesday, the route 25 is estimated to be from "home" to "work" and planned accordingly.

In other words, the estimated route may either be derived from a current position and heading of the vehicle, historical driving patterns associated with the vehicle, or directly indicated in positional data obtained from e.g. a navigation system of the vehicle 1 or any other suitable sub-system of the vehicle.

Further, each of the road portions 21-24 are associated with an accident intensity (i.e. an intensity in a Poisson sense), and may be obtained from the accident intensity engine mentioned in the foregoing. Once the accident intensities for the road portions 21-24 of the estimated route 25 to be travelled by the vehicle have been obtained, an optimization algorithm is configured to generate a path for the vehicle 1 along the estimate route 25 under a set of constraints. The set of constraints comprises at least one of a route travel time constraint for the path along the estimated route and a route risk constraint. The determined path has a speed profile along the estimate route, thus the determined path may be understood as a determined trajectory for the vehicle 1 along the estimated route.

Furthermore, in some embodiments, the optimization algorithm may be configured to weight the risk associated with the road portions 21-24 differently in dependence on if a road portion is directly associated with "accident data" or indirectly associated with "accident data". As mentioned, the road portions 21-24 may be indirectly associated with some "accident data" (i.e. the scenarios for those road portion 21-24 is associated with historical accidents/incidents) or directly associated with "accident data" (i.e. those road portions 21-24 are associated with historical accidents/incidents). More specifically, the optimization algorithm may be configured so to determine a (first) road portion directly associated "accident data" to be associated with a higher risk for traveling on that (first) road portion than a (second) road portion that is indirectly associated with "accident data".

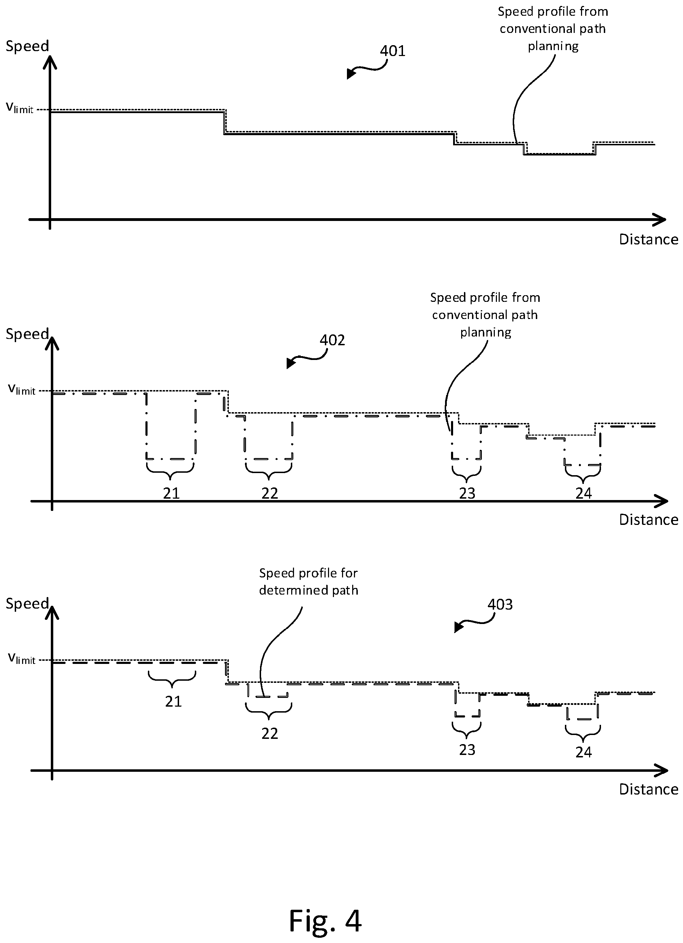

The resulting path and in particular the speed profile 403 of the path is depicted in Fig. 4. Moreover, Fig. 4 shows a comparison between the speed profile 403 as generated in accordance with some embodiments, with paths 401, 402 generated by some conventional path/route planning solutions. Each speed profile 401-403 are illustrated as a graph of speed over distance.

In more detail, the top-most graph shows the output from a conventional route or path planning solution, e.g. the output from a common navigation system where the vehicle (i.e. an ADS-equipped vehicle) or driver of the vehicle is expected to follow the speed limit (vₗᵢₘᵢₜ) from point A to point B without any consideration on any "high-risk" zones along the route. The middle graph 402 shows the output from a slightly more advanced solution, where some "high-risk" zones 21-24 have been identified (e.g. based on data from one or more accident databases comprising information about historical accidents at those zones or road portions). In the present example, these "high-risk" zones correspond to the road portions depicted in Fig. 3. However, in general, such solutions require that the vehicle or the driver of the vehicle uniformly reduces the speed at those "high-risk" zones in order to fulfil an imposed safety requirement. Moreover, in some cases, such path planning solutions may prompt the vehicle or driver of the vehicle to uniformly reduce the speed along the entire route and that the entire route is considered as a "high-risk" zone.

Thus, the present inventor realized that it may not even be possible to encourage drivers to lower their driving speed uniformly (or to allow their ADS-equipped vehicles to travel at lower speeds), and that this would therefore be inefficient as an intervention tool. The reason is both that drivers won't comply, but also that the "cost" in terms of time to complete a route exceeds the gain in lowered accident risk. Thus, by utilizing accident intensities it is possible to provide an optimizing algorithm that is configured to output "optimal" speed profiles (may also be referred to as travel velocities) along a route, which minimizes the accident/incident risk for a given route, given constraints such as total travel time. Since the accident intensity measure is inherently linear as a function of the vehicle speed per road portion, it is possible to utilize linear programming to generate a path for the vehicle. Thus, by means of the present invention it is possible to utilize known and stable/robust optimization solutions, meaning that it is possible to utilize this path planning in run-time with on-board processing power.

In more detail, a general objective/goal when formulating an optimization problem is to adapt the problem one is trying to solve so to fit within existing frameworks where there are already well-known solution methods. In the present case, it is desirable to fit the problem at hand into a linear programming setting. This presents two problems to be solved:
First, it is desirable to model the objective function (i.e. the accident intensity) as a linear function of the travel speed at each road portion, i.e. ${\sum }_{i = 0}^{n} {x}_{i} {a}_{i}$ for travel speeds *xᵢ* and a constant *aᵢ.* A linear approximation is a quite natural first modelling approximation of the accident intensity function since it can be interpreted as its directional derivative in the travel speed variables *xᵢ.* The parameter *aᵢ* can be estimated by calculating difference quotients (i.e. $f ′ \left(x\right) \approx \frac{f \left(x+h\right) - f \left(x\right)}{h}$*, h >* 0 for the one-dimensional case) from the accident intensity for each road portion by comparing with the accident intensities for other segments for which all data except travel speed are similar.

In other words, it is possible to use difference quotients of the accident intensities as gradients of the "objective function" in order to estimate the change in accident intensity as a function of travel speed for each road segment. However, in some embodiments, the accident intensity is in the form of a full parametrized model, making it relatively straightforward to extract gradients from the accident intensity.

Second, in order to be able to model our problem using linear programming it is desirable to be able to approximate the average travel time along a route as a linear function of the travel speeds *xᵢ* per road portion. This can be motivated as follows: One can express the travel time per road portion as the length of the road portion *sᵢ* divided by the average speed *xᵢ,* for each road portion i, to obtain the time spent on the road portion *i* as ${t}_{i} = \frac{{s}_{i}}{{x}_{i}}$. This function can in turn be approximated as ${t}_{i} = \frac{{s}_{i}}{{x}_{i}} \approx {a}_{i} - {b}_{i} {x}_{i}$ for some constants *aᵢ, bᵢ.* Hence, one can in this way write the average travel time along a route as a linear function of the travel speeds *xᵢ* per road portion.

Once these two steps are completed, it is straightforward to use Linear Programming to solve the optimization problem.

Further, since the accident intensity provides a relatively accurate estimation of the actual risk exposure for a vehicle (and its occupants) for specific road segments, one can reduce the vehicle speed at most optimal road portions (in terms of gain in reduced risk) and thereby have as little effect as possible on the total travel time for the entire route. In other words, by means of the present invention it is possible to target "just-the-right" road portions and reduce the vehicle speed at those road portions in order to find an optimal path/trajectory in terms of safety as well as other constraints such as e.g., total travel time.

In more detail, the by using the accident intensity it is possible to differentiate between two or more road portions (each associated with historical accidents as given by data from one or more accident databases), and to conclude that one of the road portions is actually associated with a 10x or 100x higher accident risk than the other road portions. While a conventional solution would treat these the same and instruct for a reduced speed at all of these road portions, the present invention allows for a more optimized solution and to e.g. reduce the speed more at the road portion associated with a 10x/100x higher accident risk and to make little to-no speed reduction at the other road portions. Due to the high difference in actual accident risk, both solutions generate a path with the same or at least very similar risk levels, while the solution according to the present invention allows for a higher travel speed and consequently a reduced total travel time for the route. This is exemplified in Figs. 3-4 with the first road portion 21, which is associated with historical accident data. Here, the path 402 generated by the conventional path planning solution treats this in the same manner as the other road portions 22-23. However, since the accident intensity provides more nuanced data in terms of the actual risk exposure, e.g., the first road portion 21 may be associated with one accident event out of a million "attempts" while the other may be associated with 100-1000 accident events out of a million "attempts". Thus, the potential gain in reduced risk by reducing the speed at the first road portion 21 makes a minor contribution to the total risk reduction for the entire route, wherefore the speed profile 403 generated by the path planning solution in accordance with some embodiments does not suggested any reduced speed at the first road portion 21.

Since the cost in terms of total travel time can be kept to a relatively low level by means of the present invention, improved comfort and user-satisfaction is readily achievable. Moreover, it is far more likely that a driver will conform to a suggested path if the "loss" in total travel time is e.g. 30 seconds versus a "loss" of 5-10 minutes for a route that "should" take e.g. 20 minutes. Thereby, some embodiments may further provide the advantage of improved general road safety.

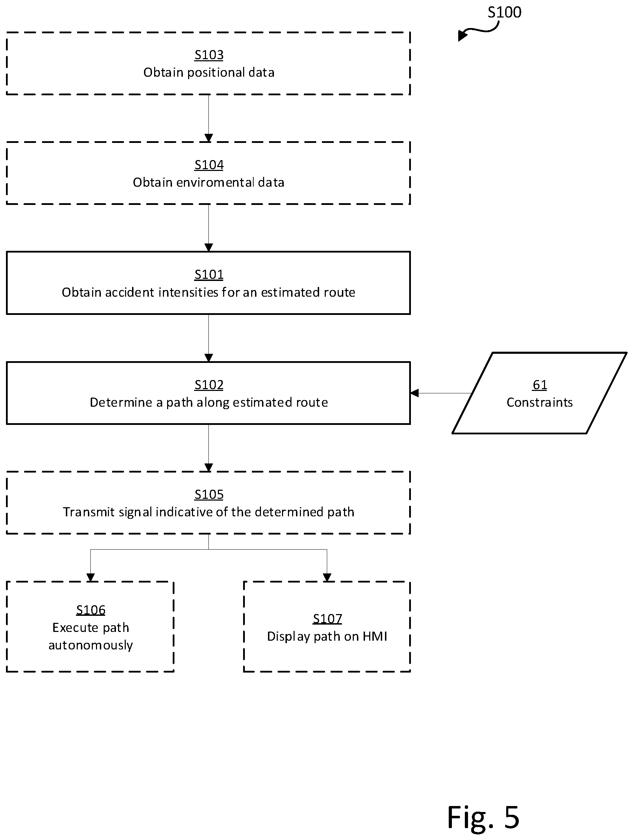

Fig. 5 is a schematic flow chart representation of a computer-implemented method S100 for determining a path for a vehicle in accordance with some embodiments. The method comprises obtaining S101 an accident intensity for each of a plurality of road portions of an estimated route to be travelled by a vehicle. The accident intensity may be understood as an intensity in a Poisson sense. As mentioned, the accident intensity is preferably in the form of a (linear) function of speed on an associated road portion.

Moreover, the estimated route to be travelled by the vehicle may be obtained directly from a navigation system of the vehicle where a vehicle occupant has provided a desired goal position, or derived from a current geographical position and heading of the vehicle. Thus, in accordance with some embodiments, the method S100 comprises obtaining S103 positional data of the vehicle. The positional data may accordingly comprise (or be indicative of) a geographical position of the vehicle (e.g. a GNSS position) and a heading of the vehicle. Furthermore, in some embodiments the positional data is further indicative of the estimated route.

Moreover, in some embodiments the method S100 further comprises obtaining S104 environmental data associated with the estimated route for the vehicle. The environmental data may for example comprise a weather forecast along the route, traffic density along the route, and so forth. Moreover, the environmental data may further be indicative of a state of the vehicle (e.g. speed of the vehicle, windshield wiper status, etc.). The environmental data may further be of a speed limit associated with each road portion of the plurality of road portions.

In some embodiments, the accident intensity is obtained from a trained model configured to determine the accident intensities associated with the plurality of road portions based on the obtained S104 environmental data and the obtained S103 positional data. Moreover, the trained model may be formed based on accident data from one or more accident databases comprising information about a plurality of critical scenarios, a time of each critical scenario and data indicative of frequencies of similar situations as the critical scenarios. The data indicative of frequencies of similar situations as the critical scenarios may be in the form of environmental data obtained over time from a plurality of vehicles in a fleet of vehicles.

Moving on, the method S100 further comprises determining S102 a path of the vehicle along the estimated route based on the obtained accident intensities under a set of constraints 61. The set of constraints comprises at least one of a route travel time constraint for the path along the estimated route and a route risk constraint. Moreover, the determined S102 path comprises a speed profile along the estimated route. A speed profile may in the present context be understood a motion profile of speed vs. distance. In other words, the determined speed profile along the route dictates what speed the vehicle should have at each part of the route. In some embodiments, the speed profile contains determined travel speeds for the plurality of road portions and a default travel speed for the remaining parts/portions of the route. The default travel speed may for example be the allowable speed limit. The "route travel time constraint" may be understood as a maximum allowable travel time for the completion of the route (i.e. for the vehicle to reach the goal/end position). The route risk constraint is understood as a maximum allowable risk as given by the obtained accident intensities.

In accordance with some embodiments, the method S100 may further comprises transmitting a signal indicative of an instruction to activate or deactivate one or more ADS features along the estimated route. In particular, the ADS features may be in the form of ADS "safety features" such as e.g. Lane Keeping Assist (LKA), Emergency Brake Assistant (EBA), or the like. In particular, the instruction to activate/deactivate the one or more ADS features may further comprise an instruction to modify one or more thresholds of the ADS features. In more detail, the determined S102 path may allow for a higher speed at a specific road portion under the assumption that the activation thresholds of one or more ADS features is lowered, thereby reducing the intervention time for the ADS feature(s) at that specific road portion. In other words, the method S100 may comprise setting one or more ADS features on a "high alert mode" in order to prepare various safety systems of the vehicle for potential upcoming high-risk scenarios.

Further, in some embodiments, the step of determining S102 a path comprises determining, by means of an optimization algorithm, the path of the vehicle along the estimated route based on the obtained accident intensities under the set of constraints. Here, the optimization algorithm may be configured to output a path for the estimated route that is associated with the lowest route risk under the route travel time constraint, or to output a path for the estimated route that is associated with the shortest route travel time under the route risk constraint.

For example, if the optimization algorithm optimizes towards lowest risk given a travel time constraint, then the situation may be such that the default route (i.e. from a start position to an end position) is associated with a default travel time of 17 minutes (as given by conventional route planners or navigation systems). The travel time constraint may be such that a maximum travel time of 18 minutes is allowed for this specific route. Then, the optimization algorithm is configured to determine the best possible path in terms of reduced risk, while conforming to the maximum allowable travel time of 18 minutes. Analogously, the optimization algorithm may be configured to optimize towards a shortest travel time given a maximum risk threshold.

Further, in accordance with some embodiments, the method S100 comprises transmitting S105 a signal indicative of the determined path to a Human-Machine-Interface (HMI) of the vehicle and/or to a control system of the vehicle. The control system may for example be an ADS of the vehicle, and the transmitted S105 may be utilized as an input by the ADS to execute S107 the determined S102 path. In other words, the method S100 may further comprise controlling the vehicle, by means of the control system, so to execute S107 the determined path along the estimated route.

The HMI may for example be an infotainment system or the instrument cluster of the vehicle, and the HMI may accordingly utilize the transmitted S105 signal as an input in order to display the determined S102 path on a suitable screen of the HMI for the driver or occupant of the vehicle to observe. Thus, in accordance with some embodiments, the step of transmitting S105 the signal comprises, at an electronic device with a display, displaying S107 on the display a user interface comprising a graphical representation indicative of the determined path. This may for example include displaying S107 the determined path on a 2D or 3D map and/or as a list of instructions.

Executable instructions for performing these functions are, optionally, included in a non-transitory computer-readable storage medium or other computer program product configured for execution by one or more processors.

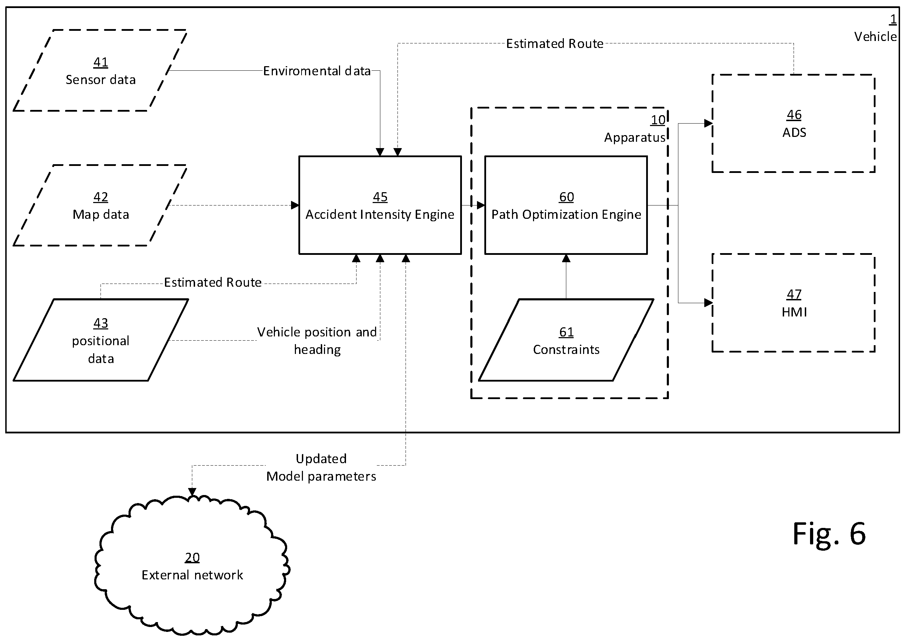

Fig. 6 is a schematic block diagram representation of an apparatus 10 for determining a path for a vehicle 1 in accordance with some embodiments. In general, Fig. 6 depicts the flow of information from the reporting of the position and heading and of the environmental data, to the accident intensity determination, and further to the determination of the path along the route that is transmitted to the ADS 46 or in-vehicle HMI 47. It should be noted that even though the accident intensity engine 45 is exemplified as being comprised by the vehicle 1, it should not be construed as limiting to the present invention. As mentioned in the foregoing, the accident intensity engine 45 may be arranged on one or more servers configured to transmit and receive data to/from the vehicle 1. The apparatus 10 comprises various control circuitry configured to perform the functions of the methods disclosed herein, where the functions may be included in a non-transitory computer-readable storage medium or other computer program product configured for execution by the control circuitry. Fig. 6 serves to better elucidate the present invention by depicting various "engines" (may also be referred to as modules) each of them linked to one or more specific functions described in the foregoing.

Moving on, the vehicle 1 has a localization system, such as e.g., a Global Navigation Satellite System (GNSS) configured to monitor a geographical position and heading/orientation of the vehicle 1. In other words, the localization system is configured to monitor a pose of the vehicle. This positional data 43 is sent to the accident intensity engine 45 together with environmental data indicating a state of the surrounding environment of the vehicle 1 and a state of the environment along the route. The environmental data may for example be derived from sensor data 41 generated by suitable vehicle-mounted sensors or from an external source (e.g. a conventional weather forecast service). The sensor data 41 may for example output from one or more of a RADAR device, a LIDAR device, a camera, and ultrasonic sensor, and so forth. The sensor data may provided directly from the vehicle-mounted sensors or indirectly by a perception system of the vehicle. A "perception system" is in the present context to be understood as a system responsible for acquiring raw sensor data from on-board sensors such as cameras, LIDARs and RADARs, ultrasonic sensors, and converting this raw data into scene understanding including state estimates and predictions thereof.

Furthermore in some embodiments, the vehicle 1 has access to map data 42 (e.g. from a local data storage device) such as e.g., HD-map data. The map data 42 may for example be indicative of a road geometry in the surrounding environment of the vehicle, and may be provided as an input to the accident intensity engine 45. Furthermore, in some embodiments, the accident intensity engine 45 may be further configured to receive an intended route of the vehicle. The intended route may for example be provided by a path-planning module of an ADS, by the GNSS or any other suitable navigational system as known in the art.

The apparatus 10 has control circuitry, here depicted as a "path optimization engine" 60, configured to obtain (e.g., from the accident intensity engine 45) an accident intensity for each of a plurality of road portions of an estimated route to be travelled by the vehicle 1. The control circuitry is further configured to determine a path of the vehicle 1 along the estimated route based on the obtained accident intensities under a set of constraints 61 wherein the set of constraints 61 comprises at least one of a route travel time constraint for the path along the estimated route and a route risk constraint. The determined path comprises a speed profile along the estimated route.

In some embodiments, the control circuitry is configured to determine, by means of an optimization algorithm, the path of the vehicle along the estimated route based on the obtained accident intensities under the set of constraints 61. Here, the optimization algorithm is configured to output a path for the estimated route that is associated with the lowest "route risk" under the route travel time constraint. Alternatively or additionally, the optimization algorithm may be configured to output a path for the estimated route that is associated with the shortest route travel time under the route risk constraint.

Further, in accordance with some embodiments, the control circuitry may be configured to transmit a signal indicative of the determined path to a Human-Machine-Interface (HMI) 47 of the vehicle 1 and/or to a control system 46 of the vehicle 1. In more detail, the transmitted signal to the HMI may prompt the HMI 47 to display, at an electronic device with a display, a user interface comprising a graphical representation indicative of the determined path. Moreover, the transmitted signal to the control system 46 may prompt the control system 46 to control the vehicle 1 so to execute the determined path along the estimated route.

In accordance with some embodiments, the control circuitry is configured to transmit a signal indicative of an instruction (to the ADS 46) to activate or deactivate one or more ADS features along the estimated route. In particular, the ADS features may be in the form of ADS "safety features" such as e.g. Lane Keeping Assist (LKA), Emergency Brake Assistant (EBA), or the like. In particular, the instruction to activate/deactivate the one or more ADS features may further comprise an instruction to modify one or more thresholds of the ADS features. In more detail, the determined path may allow for a higher speed at a specific road portion under the assumption that the activation thresholds of one or more ADS features is lowered, thereby reducing the intervention time for the ADS feature(s) at that specific road portion. In other words, the control circuitry may be configured to set one or more ADS features on a "high alert mode" in order to prepare various safety systems of the vehicle for potential upcoming high-risk scenarios.

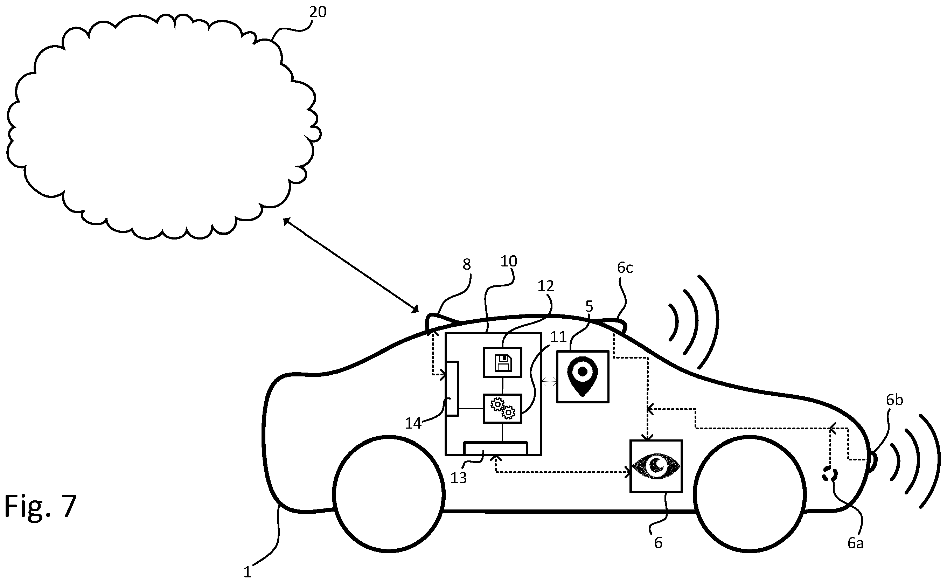

Fig. 7 depicts a schematic side view of a vehicle 1 comprising an apparatus 10 for determining a path for a vehicle (either manually or autonomously). The vehicle 1 further comprises a perception system 6 and a localization system 5. A perception system 6 is in the present context to be understood as a system responsible for acquiring raw sensor data from on-board sensors 6a, 6b, 6c such as cameras, LIDARs and RADARs, ultrasonic sensors, and converting this raw data into scene understanding. The localization system 5 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy.

In more detail, the perception system 6 may refer to any commonly known system and/or functionality, e.g. comprised in one or more electronic control modules and/or nodes of the vehicle 1, adapted and/or configured to interpret sensory information - relevant for driving of the vehicle 1 - to identify e.g. obstacles, vehicle lanes, relevant signage, appropriate navigation paths etc. The exemplified perception system 6 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional surrounding detecting sensors 6a-c comprised in and/or provided on-board the vehicle 1. The surrounding detecting sensors 6a-c may be represented by any arbitrary sensors adapted to sense and/or perceive the vehicle's 1 surroundings and/or whereabouts, and may e.g. refer to one or a combination of one or more of radar, LIDAR, sonar, camera, navigation system e.g. GPS, odometer and/or inertial measurement units.

The apparatus 10 comprises one or more processors 11, a memory 12, a sensor interface 13 and a communication interface 14. The processor(s) 11 may also be referred to as a control circuit 11 or control circuitry 11. The control circuitry 11 is configured to execute instructions stored in the memory 12 to perform a method determining a path to be executed by the vehicle 1 according to any one of the embodiments disclosed herein. Stated differently, the memory 12 of the apparatus 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The apparatus 10 is further provided with a communication interface 14 and a sensor interface 13.

Further, the vehicle 1 may be connected to external network(s) 20 via for instance a wireless link (e.g. for retrieving map data, weather forecasts, updating the accident intensity model, etc.). The same or some other wireless link may be used to communicate with other vehicles in the vicinity of the vehicle 1 or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the apparatus 10) may be or include any number of hardware components for conducting data or signal processing or for executing computer code stored in memory 12. The apparatus 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 14 may also provide the possibility to acquire sensor data directly or via dedicated sensor control circuitry 6 in the vehicle. The communication/antenna interface 14 may further provide the possibility to send output to a remote location (e.g. remote operator or control centre) by means of the antenna 8. Moreover, some sensors in the vehicle may communicate with the apparatus 10 using a local network setup, such as CAN bus, I2C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, positional data may be sent to an external system and that system performs the steps to determine the accident intensity for an upcoming road portion of the vehicle 1. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent embodiments should be apparent for the person skilled in the art.

## Claims

1. A computer-implemented method (S100) for determining a path for a vehicle, the method comprising:
obtaining (S101), from a trained accident intensity model, an accident intensity for each of a plurality of road portions of an estimated route to be travelled by a vehicle, wherein the accident intensity is an intensity in a Poisson sense;
determining (S102) a path for the vehicle along the estimated route based on the obtained accident intensities under a set of constraints, wherein the set of constraints comprises at least one of a route travel time constraint for the path along the estimated route and a route risk constraint indicative of a maximum allowable risk of the route as given by the accident intensity; and
wherein the determined path comprises a speed profile along the estimated route.

2. The method (S100) according to claim 1, wherein the step of determining (S102) a path comprises:
determining, by means of an optimization algorithm, the path for the vehicle along the estimated route based on the obtained accident intensities under the set of constraints, wherein the optimization algorithm is configured to output a path for the estimated route that is associated with the lowest route risk under the route travel time constraint.

3. The method (S100) according to claim 1, wherein the step of determining (S102) a path comprises:
determining, by means of an optimization algorithm, the path for the vehicle along the estimated route based on the obtained accident intensities under the set of constraints, wherein the optimization algorithm is configured to output a path for the estimated route that is associated with the shortest route travel time under the route risk constraint.

4. The method (S100) according to claim 1 or 2, wherein each accident intensity is in the form of a function of speed on an associated road portion.

5. The method according to claim 4, wherein the function is a linear function.

6. The method (S100) according to any one of claims 1 - 5, further comprising:
transmitting (S105) a signal indicative of the determined path to a Human-Machine-Interface, HMI, of the vehicle and/or to a control system of the vehicle.

7. The method (S100) according to claim 6, wherein the step of transmitting (S105) the signal indicative of the determined path to the HMI of the vehicle comprises:
at an electronic device with a display:
displaying (S107) on the display a user interface comprising:
a graphical representation indicative of the determined path.

8. The method (S100) according to claim 6, wherein the signal indicative of the determined path to a control system of the vehicle, the method further comprising:
controlling (S106) the vehicle, by means of the control system, so to execute the determined path along the estimated route.

9. The method (S100) according to any one of claims 1 - 8, further comprising:
obtaining (S103) positional data of the vehicle, the positional data indicating a geographical position and a heading of the vehicle;
obtaining (S104) environmental data associated with the estimated route for the vehicle.

10. The method (S100) according to claim 9, wherein the positional data is further indicative of the estimated route.

11. The method (S100) according to any one of claims 9 - 10, wherein the environmental data is further indicative of a speed limit associated with each road portion of the plurality of road portions.

12. The method (S100) according to any one of claims 1 to 11, wherein the trained accident intensity model is formed based on accident data from one or more accident databases comprising information about a plurality of critical scenarios, a time of each critical scenario and data indicative of frequencies of similar situations as the critical scenarios, wherein the data indicative of frequencies of similar situations defines a number of attempts associated with each critical scenario.

13. A computer-readable storage medium storing one or more programs configured to be executed by one or more processors of a processing system, the one or more programs comprising instructions for performing the method according to any one of the preceding claims.

14. An apparatus (10) for determining a path for a vehicle (1), the apparatus comprising control circuitry (11) configured to:
obtain, from a trained accident intensity model, an accident intensity for each of a plurality of road portions (21, 22, 23, 24) of an estimated route (25) to be travelled by the vehicle (1), wherein the accident intensity is an intensity in a Poisson sense;
determine a path for the vehicle along the estimated route based on the obtained accident intensities under a set of constraints (61), wherein the set of constraints comprises at least one of a route travel time constraint for the path along the estimated route and a route risk constraint indicative of a maximum allowable risk of the route as given by the accident intensity;
wherein the determined path comprises a speed profile (403) along the estimated route.

15. A vehicle (1) comprising:
a localization system (5) for monitoring a geographical location and a heading of the vehicle;
an apparatus (10) according to claim 14.

## Patentansprüche

1. Computerimplementiertes Verfahren (S100) zum Bestimmen einer Bahn für ein Fahrzeug, wobei das Verfahren Folgendes umfasst:
Erlangen (S101) einer Unfallintensität für jeden einer Vielzahl von Straßenabschnitten einer geschätzten Strecke, die mit einem Fahrzeug zurückzulegen ist, aus einem trainierten Unfallintensitätsmodell, wobei die Unfallintensität eine Intensität im Poisson-Sinn ist;
Bestimmen (S102) einer Bahn für das Fahrzeug entlang der geschätzten Strecke basierend auf den erlangten Unfallintensitäten unter einer Reihe von Einschränkungen, wobei die Reihe von Einschränkungen mindestens eine von einer Einschränkung für Streckenfahrzeiten für die Bahn entlang der geschätzten Strecke und einer Streckenrisikoeinschränkung umfasst, die auf ein maximal zulässiges Risiko der Strecke hinweist, wie durch die Unfallintensität vorgegeben; und
wobei die bestimmte Bahn ein Geschwindigkeitsprofil entlang der geschätzten Strecke umfasst.

2. Verfahren (S100) nach Anspruch 1, wobei der Schritt zum Bestimmen (S102) einer Bahn Folgendes umfasst:
Bestimmen der Bahn für das Fahrzeug entlang der geschätzten Strecke mittels eines Optimierungsalgorithmus basierend auf den erlangten Unfallintensitäten unter der Reihe von Einschränkungen, wobei der Optimierungsalgorithmus dazu konfiguriert ist, eine Bahn für die geschätzte Strecke auszugeben, die dem geringsten Streckenrisiko unter der Einschränkung für Streckenfahrzeiten zugeordnet ist.

3. Verfahren (S100) nach Anspruch 1, wobei der Schritt zum Bestimmen (S102) einer Bahn Folgendes umfasst:
Bestimmen der Bahn für das Fahrzeug entlang der geschätzten Strecke mittels eines Optimierungsalgorithmus basierend auf den erlangten Unfallintensitäten unter der Reihe von Einschränkungen, wobei der Optimierungsalgorithmus dazu konfiguriert ist, eine Bahn für die geschätzte Strecke auszugeben, die der kürzesten Streckenfahrzeit unter der Streckenrisikoeinschränkung zugeordnet ist.

4. Verfahren (S100) nach Anspruch 1 oder 2, wobei jede Unfallintensität in der Form einer Geschwindigkeitsfunktion auf einem zugeordneten Straßenabschnitt vorliegt.

5. Verfahren nach Anspruch 4, wobei die Funktion eine lineare Funktion ist.

6. Verfahren (S100) nach einem der Ansprüche 1-5, ferner umfassend:
Übertragen (S105) eines Signals, das auf die bestimmte Bahn hinweist, an eine Mensch-Maschine-Schnittstelle, HMI, des Fahrzeugs und/oder ein Steuersystem des Fahrzeugs.

7. Verfahren (S100) nach Anspruch 6, wobei der Schritt zum Übertragen (S105) des Signals, das auf die bestimmte Bahn hinweist, an die HMI des Fahrzeugs Folgendes umfasst:
an einer elektronischen Vorrichtung mit einer Anzeige:
Anzeigen (S107) einer Benutzerschnittstelle auf der Anzeige, umfassend:
eine grafische Darstellung, die auf die bestimmte Bahn hinweist.

8. Verfahren (S100) nach Anspruch 6, wobei das Signal, das auf die bestimmte Bahn hinweist, an das Steuersystem des Fahrzeugs, wobei das Verfahren ferner Folgendes umfasst:
Steuern (S106) des Fahrzeugs mittels des Steuersystems, um die bestimmte Bahn entlang der geschätzten Strecke auszuführen.

9. Verfahren (S100) nach einem der Ansprüche 1-8, ferner umfassend:
Erlangen (S103) von Positionsdaten des Fahrzeugs, wobei die Positionsdaten eine geographische Position und eine Fahrtrichtung des Fahrzeugs angeben;
Erlangen (S104) von Umweltdaten, die der geschätzten Strecke für das Fahrzeug zugeordnet sind.

10. Verfahren (S100) nach Anspruch 9, wobei die Positionsdaten ferner auf die geschätzte Strecke hinweisen.

11. Verfahren (S100) nach einem der Ansprüche 9-10, wobei die Umweltdaten ferner auf eine Geschwindigkeitsbegrenzung hinweisen, die jedem Straßenabschnitt der Vielzahl von Straßenabschnitten zugeordnet ist.

12. Verfahren (S100) nach einem der Ansprüche 1 bis 11, wobei das trainiertes Unfallintensitätsmodell basierend auf Unfalldaten aus einer oder mehreren Unfalldatenbanken ausgebildet ist, die Informationen über eine Vielzahl von kritischen Szenarien, eine Uhrzeit jedes kritischen Szenarios und Daten umfassen, die auf Häufigkeiten ähnlicher Situationen wie den kritischen Szenarien hinweisen, wobei die Daten, die auf Häufigkeiten ähnlicher Situationen hinweisen, eine Anzahl von Versuchen definieren, die jedem kritischen Szenario zugeordnet sind.

13. Computerlesbares Speichermedium, das ein oder mehrere Programme speichert, die dazu konfiguriert sind, durch einen oder mehrere Prozessoren eines Verarbeitungssystems ausgeführt zu werden, wobei das eine oder die mehreren Programme Anweisungen zum Durchführen des Verfahrens nach einem der vorhergehenden Ansprüche umfassen.

14. Vorrichtung (10) zum Bestimmen einer Bahn für ein Fahrzeug (1), wobei die Vorrichtung eine Steuerschaltung (11) umfasst, die dazu konfiguriert ist:
eine Unfallintensität für jeden einer Vielzahl von Straßenabschnitten (21, 22, 23, 24) einer geschätzten Strecke (25), die mit dem Fahrzeug (1) zurückzulegen ist, aus einem trainierten Unfallintensitätsmodell zu erlangen, wobei die Unfallintensität eine Intensität im Poisson-Sinn ist;
eine Bahn für das Fahrzeug entlang der geschätzten Strecke basierend auf den erlangten Unfallintensitäten unter einer Reihe von Einschränkungen (61) zu bestimmen, wobei die Reihe von Einschränkungen mindestens eine von einer Einschränkung für Streckenfahrzeiten für die Bahn entlang der geschätzten Strecke und einer Streckenrisikoeinschränkung umfasst, die auf ein maximal zulässiges Risiko der Strecke hinweist, wie durch die Unfallintensität vorgegeben;
wobei die bestimmte Bahn ein Geschwindigkeitsprofil (403) entlang der geschätzten Strecke umfasst.

15. Fahrzeug (1), umfassend:
ein Lokalisierungssystem (5) zum Überwachen eines geografischen Standorts und einer Fahrtrichtung des Fahrzeugs;
eine Vorrichtung (10) nach Anspruch 14.

## Revendications

1. Procédé mis en œuvre par ordinateur (S100) pour déterminer un trajet pour un véhicule, le procédé comprenant les étapes consistant à :
obtenir (S101), à partir d'un modèle d'intensité d'accidents entraîné, une intensité d'accidents pour chaque portion d'une pluralité de portions de route d'un itinéraire estimé devant être parcouru par le véhicule, l'intensité d'accidents étant une intensité au sens de Poisson ;
déterminer (S102) un trajet pour le véhicule le long de l'itinéraire estimé sur la base des intensités d'accidents obtenues sous réserve d'un ensemble de contraintes, dans lequel l'ensemble de contraintes comprend au moins une contrainte parmi une contrainte de temps de parcours d'itinéraire pour le trajet le long de l'itinéraire estimé et une contrainte de risque d'itinéraire indiquant un risque maximal admissible de l'itinéraire tel que défini par l'intensité d'accidents ; et
dans lequel le trajet déterminé comprend un profil de vitesse le long de l'itinéraire estimé.

2. Procédé (S100) selon la revendication 1, dans lequel l'étape consistant à déterminer (S102) un trajet comprend l'étape consistant à :
déterminer, au moyen d'un algorithme d'optimisation, le trajet pour le véhicule le long de l'itinéraire estimé sur la base des intensités d'accidents obtenues sous réserve de l'ensemble de contraintes, dans lequel l'algorithme d'optimisation est configuré pour délivrer en sortie un trajet pour l'itinéraire estimé qui est associé au risque d'itinéraire minimal sous réserve de la contrainte de temps de parcours d'itinéraire.

3. Procédé (S100) selon la revendication 1, dans lequel l'étape consistant à déterminer (S102) un trajet comprend l'étape consistant à :
déterminer, au moyen d'un algorithme d'optimisation, le trajet pour le véhicule le long de l'itinéraire estimé sur la base des intensités d'accidents obtenues sous réserve de l'ensemble de contraintes, dans lequel l'algorithme d'optimisation est configuré pour délivrer en sortie un trajet pour l'itinéraire estimé qui est associé au temps de parcours d'itinéraire minimal sous réserve de la contrainte de risque d'itinéraire.

4. Procédé (S100) selon la revendication 1 ou 2, dans lequel chaque intensité d'accidents est sous la forme d'une fonction de la vitesse sur une portion de route associée.

5. Procédé selon la revendication 4, dans lequel la fonction est une fonction linéaire.

6. Procédé (S100) selon l'une quelconque des revendications 1 à 5, comprenant en outre l'étape consistant à : transmettre (S105) un signal indicatif du trajet déterminé à une interface homme-machine (IHM) du véhicule et/ou à un système de commande du véhicule.

7. Procédé (S100) selon la revendication 6, dans lequel l'étape consistant à transmettre (S105) le signal indicatif du trajet déterminé à l'IHM du véhicule comprend,
au niveau d'un dispositif électronique doté d'un écran, l'étape consistant à :
afficher (S107) sur l'écran une interface utilisateur comprenant :
une représentation graphique indicative du trajet déterminé.

8. Procédé (S100) selon la revendication 6, dans lequel le signal indicatif du trajet déterminé est destiné à un système de commande du véhicule, le procédé comprenant en outre l'étape consistant à :
commander (S106) le véhicule, au moyen du système de commande, de façon à exécuter le trajet déterminé le long de l'itinéraire estimé.

9. Procédé (S100) selon l'une quelconque des revendications 1 à 8, comprenant en outre les étapes consistant à :
obtenir (S103) des données de position du véhicule, les données de position indiquant une position géographique et un cap du véhicule ;
obtenir (S104) des données environnementales associées à l'itinéraire estimé pour le véhicule.

10. Procédé (S100) selon la revendication 9, dans lequel les données de position sont en outre indicatives de l'itinéraire estimé.

11. Procédé (S100) selon l'une quelconque des revendications 9 et 10, dans lequel les données environnementales sont en outre indicatives d'une limitation de vitesse associée à chaque portion de route de la pluralité de portions de route.

12. Procédé (S100) selon l'une quelconque des revendications 1 à 11, dans lequel le modèle d'intensité d'accidents entraîné est formé sur la base de données d'accidents provenant d'au moins une base de données d'accidents comprenant des informations concernant une pluralité de scénarios critiques, une heure de chaque scénario critique et des données indiquant des fréquences de situations similaires aux scénarios critiques, dans lequel les données indiquant des fréquences de situations similaires définissent un nombre de tentatives associées à chaque scénario critique.

13. Support de stockage lisible par ordinateur stockant au moins un programme configuré pour être exécuté par au moins un processeur d'un système de traitement, ledit au moins un programme comprenant des instructions pour réaliser le procédé selon l'une quelconque des revendications précédentes.

14. Appareil (10) pour déterminer un trajet pour un véhicule (1), l'appareil comprenant un circuit de commande (11) configuré pour :
obtenir, à partir d'un modèle d'intensité d'accidents entraîné, une intensité d'accidents pour chaque portion d'une pluralité de portions de route (21, 22, 23, 24) d'un itinéraire estimé (25) devant être parcouru par le véhicule (1), l'intensité d'accidents étant une intensité au sens de Poisson ;
déterminer un trajet pour le véhicule le long de l'itinéraire estimé sur la base des intensités d'accidents obtenues sous réserve d'un ensemble de contraintes (61), dans lequel l'ensemble de contraintes comprend au moins une contrainte parmi une contrainte de temps de parcours d'itinéraire pour le trajet le long de l'itinéraire estimé et une contrainte de risque d'itinéraire indiquant un risque maximal admissible de l'itinéraire tel que défini par l'intensité d'accidents ;
dans lequel le trajet déterminé comprend un profil de vitesse (403) le long de l'itinéraire estimé.

15. Véhicule (1) comprenant :
un système de localisation (5) pour surveiller une position géographique et un cap du véhicule ;
un appareil (10) selon la revendication 14.
